# EUROPEAN PATENT APPLICATION

(11) **EP 2 903 348 A1**
(43) Date of publication of application: **05.08.2015**
(21) Application number: 13840604.6
(22) Date of filing: 13.09.2013
(51) Int. Cl.: H04W 48/08

(54) **LOCAL BEARER MANAGEMENT METHOD AND DEVICE**

(30) Priority: 28.09.2012 CN 201210370992
(71) Applicant: China Academy of Telecommunications Technology, Haidian District Beijing 100191 (CN)
(72) Inventor: ZHANG, Dajun, Beijing 100191 (CN); ZHAO, Yali, Beijing 100191 (CN); FU, Zhe, Beijing 100191 (CN)
(74) Representative: Nony
(86) International application number: PCT/CN2013/083436
(87) International publication number: WO 2014/048256

(57) **Abstract**

Disclosed are a local bearer management method and device. The method comprises: a macro base station receiving user dedicated resource information configured by a local base station and/or local public resource information configured by the local base station; and the macro base station sending to a corresponding user equipment the user dedicated resource information configured by the local base station and/or the local public resource information configured by the local base station, so as to indicate the corresponding user equipment to perform resource configuration.

## Description

### Field

The present disclosure relates to the field of wireless communications and particularly to a method and device for managing a local bearer.

### Background

The network architecture of an evolved Universal Terrestrial Radio Access Network (e-UTRAN) generally includes evolved Node B's (eNB's).

A Mobility Management Entity (MME) is connected with an eNB via an S1-MME interface, and the eNB as an access network and communicates with a User Equipment (UE) via an air interface. Each UE attached to the network, i.e., each UE with a communication connection established with the network, is served by an MME which is referred to as a serving MME of the UE. The S1-MME interface provides the UE with control plane services including mobility management and bearer management functions.

A Serving Gateway (S-GW) is connected with an eNB via an S1-U interface, and each UE attached to the network is served by an S-GW which is referred to as a serving S-GW of the UE. The S1-U interface provides the UE with user plane services, and user plane data of the UE is transmitted between the S-GW and the eNB over an S1-U General Packet Radio Service (GPRS) Tunnelling Protocol (GTP) bearer.

User plane protocol layers between the UE and the network include the Package Data Convergence Protocol (PDCP) layer, the Radio Link Control (RLC) layer, the Media Access Control (MAC) layer and the Physical (PHY) layer; and control plane protocol layers between the UE and the network include the Radio Resource Control (RRC) layer and the Non-Access Stratum (NAS) layer, here an RRC layer message needs to be processed at the user plane protocol layers before transmitting via the air interface; and an NAS layer message is encapsulated in an RRC message at the air interface for transmission.

### Summary

Embodiments of the disclosure provide a method and device for managing a local bearer so as to manage the local bearer in a bearer separation-enabled network.

An embodiment of the disclosure provides a method for managing a local bearer, the method including: receiving, by an eNB, UE specific resource information configured by a local eNB and/or local common resource information configured by the local eNB; and transmitting, by the macro eNB, the UE specific resource information configured by the local eNB and/or the local common resource information configured by the local eNB to a corresponding UE to instruct the corresponding UE to configure resources.

Another embodiment of the disclosure provides a method for managing a local bearer, the method including: configuring, by a local eNB, a UE with UE specific resource information and/or local common resource information; and transmitting, by the local eNB, the configured UE specific resource information and/or local common resource information to a macro eNB so that the macro eNB transmits the UE specific resource information and/or the local common resource information to the corresponding UE to instruct the corresponding UE to configure resources.

An embodiment of the disclosure provides a macro eNB device including: a receiving module to configured to receive UE specific resource information configured by a local eNB and/or local common resource information configured by the local eNB; and a resource configuration indicating module configured to transmit the UE specific resource information configured by the local eNB, and/or the local common resource information configured by the local eNB, both of which is received by the receiving module to a corresponding UE to instruct the corresponding UE to configure resources.

An embodiment of the disclosure provides a local eNB device including: a configuring module configured to configure a UE with UE specific resource information and/or local common resource information; and a transmitting module configured to transmit the UE specific resource information and/or the local common resource information configured by the configuring module to a macro eNB so that the macro eNB transmits the UE specific resource information and/or the local common resource information to the corresponding UE to instruct the corresponding UE to configure resources.

With the embodiments above of the disclosure, the local eNB configures and manages the UE specific resources and the common resources so that the user plane of the UE can be separated to the local eNB to thereby decrease the number of times that the control plane of the UE is switched so as to lower the probability that a call of the UE may be dropped, i.e., the probability that an RRC connection between the UE and the network may be broken.

### Brief Description of the Drawings

Fig. 1 illustrates a schematic flow chart of a method for managing a local bearer according to an embodiment of the disclosure;
Fig. 2 illustrates a schematic flow chart of a method for managing a local bearer according to an embodiment of the disclosure;
Fig. 3 illustrates a flow chart of a macro eNB operating to separate the control plane of a UE from the user plane of the UE according to an embodiment of the disclosure;
Fig. 4 illustrates a flow chart of a macro eNB modifying established bearers according to an embodiment of the disclosure;

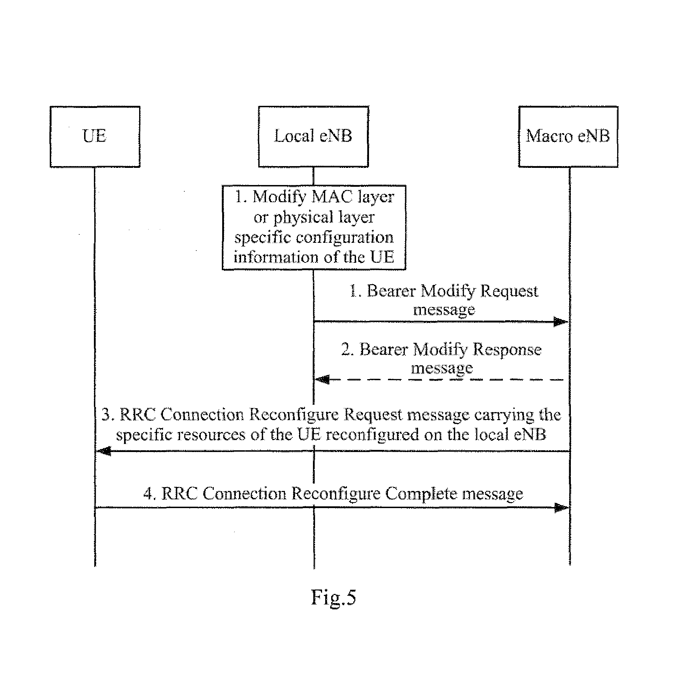

Fig. 5 illustrates a flow chart of a local eNB modifying established bearers according to an embodiment of the disclosure;
Fig. 6 illustrates a first flow chart when a local common resource is changed according to an embodiment of the disclosure;
Fig.7 illustrates a second flow chart when a local common resource is changed according to an embodiment of the disclosure;
Fig. 8 illustrates a flow chart of a macro eNB deleting a bearer of the UE at a local eNB according to an embodiment of the disclosure;
Fig. 9A illustrates a schematic structural diagram of a macro eNB according to an embodiment of the disclosure;
Fig. 9B illustrates a schematic structural diagram of a macro eNB according to an embodiment of the disclosure;
Fig. 10A illustrates a schematic structural diagram of a macro eNB in hardware according to an embodiment of the disclosure;
Fig. 10B illustrates a schematic structural diagram of a macro eNB in hardware according to an embodiment of the disclosure;
Fig. 11A illustrates a schematic structural diagram of a local eNB according to an embodiment of the disclosure;
Fig.11B illustrates a schematic structural diagram of a local eNB according to an embodiment of the disclosure;
Fig. 12A illustrates a schematic structural diagram of a local eNB in hardware according to an embodiment of the disclosure; and
Fig. 12B illustrates a schematic structural diagram of a local eNB in hardware according to an embodiment of the disclosure.

### Detailed Description

In an LTE-LTE-A network, all the RRC/PDCP/RLC/MAC/PHY peers of a UE are located in the same eNB, and the peer ofNAS layer of the UE is located in an MME with an S1 connection established with the eNB for the UE.

A constantly growing demand of people for a data service rate and capacity has failed to be accommodated in a traditional network covered by a macro eNB alone, so that layered network deployment, for example, has been introduced to address this problem, that is, some low-power eNB's (referred below to as local eNB's in the femto, pico, relay or other forms) are deployed in a hotspot area, a home indoor environment, an office or other small-coverage environments to thereby split a cell so as to enable an operator to provide a user with a service at a higher data rate and a low cost.

Layered network deployment may come with some side effect together with an extended capacity of the network in that there is a small coverage area of a cell of a low-power eNB (referred below to as a local cell), so that the UE may be switched at a greatly increased frequency and for a greatly increased number of times, thus increasing a risk of interrupted communication of the UE being switched.

In order to lower the frequency at which a UE is switched between a macro cell and a local cell, a network deployment approach with the user plane separated from the control plane has been introduced, that is, the macro cell provides underlying coverage, and the local cell provides hotspot coverage, and there is a data/signaling interface (wired/wireless interface) between the local cell and the macro cell, so that the UE can operate while being served by the macro eNB or the local eNB.

Since there are a small coverage area of, and a small number of UE's served by, the cell controlled by the local eNB, a UE connected with the local eNB tends to be provided with a higher quality of service, e.g., a higher service rate, a link with a higher quality, etc., so when the UE connected with the macro eNB is close to the cell controlled by the local eNB, the UE can be switched to the local eNB for a service available from the local eNB; and when the UE is remote from the cell controlled by the local eNB, the UE needs to be switched to the cell controlled by the macro eNB to maintain a radio connection.

In the bearer separation-enabled network architecture above, when the UE resides in an area covered only by the macro cell, both control plane connections (i.e., Signaling Radio Bearers (SRB's)) and user plane connections (i.e., Data Radio Bearers (DRB's)) of the UE are active at the macro eNB; and when the UE is moved to an area covered by both the macro cell and the local cell, all or a part of the user plane connections (DRB's) of the UE are transferred to the local eNB for a higher service transmission rate, and the control plane connections remain active at the macro eNB to thereby prevent a call of the UE from being dropped due to a failure to switch a connection plane connection, i.e., prevent an RRC connection between the UE and the network from being broken.

For example, in the network architecture with the control plane separated from the user plane, the UE is connected with both the eNB's, i.e., the macro eNB and the local eNB between which there is a logical interface referred to as an M-L interface. The control plane connections (SRB's) of the UE are maintained on the macro eNB, and the PDCP/RLC/MAC/PHY layers of all or a part of the DRB's are maintained on the local eNB. Uplink data of the UE arrives at the local eNB and then is transmitted directly to a Serving Gateway (SGW), and downlink data of the UE arrives at the SGW and then is transmitted directly to the local eNB, thus alleviating a burden of the macro eNB for processing data packets of the UE. In a Heterogeneous Network (HetNet) including cells of different sizes and types, e.g., macro cells, local cells, etc., there is a small coverage area of the local cell, so that the UE will be triggered to be switched even if it moves slightly, and thus only the user plane of the UE may be switched to the local eNB. In order to support this feature, it is desirable to address the problem of how to manage and allocate a local bearer resource in the bearer separation-enabled network.

In order to address the problem above, embodiments of the disclosure provide such a technical solution that a local eNB manages and configures its common resources and UE specific resources, where common resource information can be retrieved from an Operation, Administration and Maintenance (OAM) of the local eNB, and each time a macro eNB decides to operate to separate the control plane from the user plane, the local eNB responsible for allocating UE specific random access resources, and RLC layer, MAC layer, PHY layer and other specific configuration information for DRB's to be separated also notifies the macro eNB of the common resource information of the local cell.

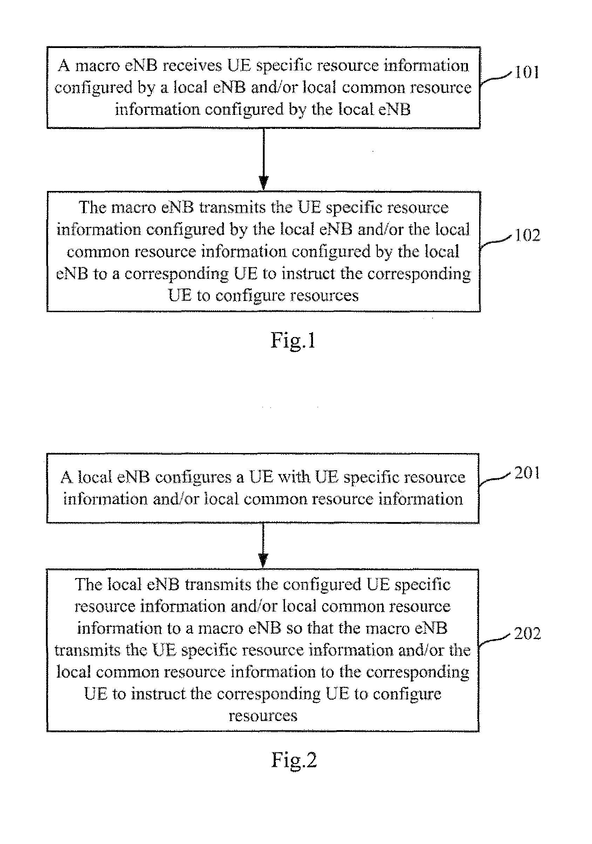

Fig. 1 illustrates a schematic flow chart of a method for managing a local bearer according to an embodiment of the disclosure, and as illustrated in Fig. 1, the method can include:

In the operation 101, a macro eNB receives UE specific resource information configured by a local eNB and/or local common resource information configured by the local eNB; and

In the operation 102, the macro eNB transmits the UE specific resource information configured by the local eNB and/or the local common resource information configured by the local eNB to a corresponding UE to instruct the corresponding UE to configure resources.

Fig. 2 illustrates a schematic flow chart of another method for managing a local bearer according to an embodiment of the disclosure, and as illustrated in Fig. 1, the method can include:

In the operation 201, a local eNB configures a UE with UE specific resource information and/or local common resource information; and

In the operation 202, the local eNB transmits the configured UE specific resource information and/or local common resource information to a macro eNB so that the macro eNB transmits the UE specific resource information and/or the local common resource information to the corresponding UE to instruct the corresponding UE to configure resources.

The embodiments of the disclosure will be described below in details.

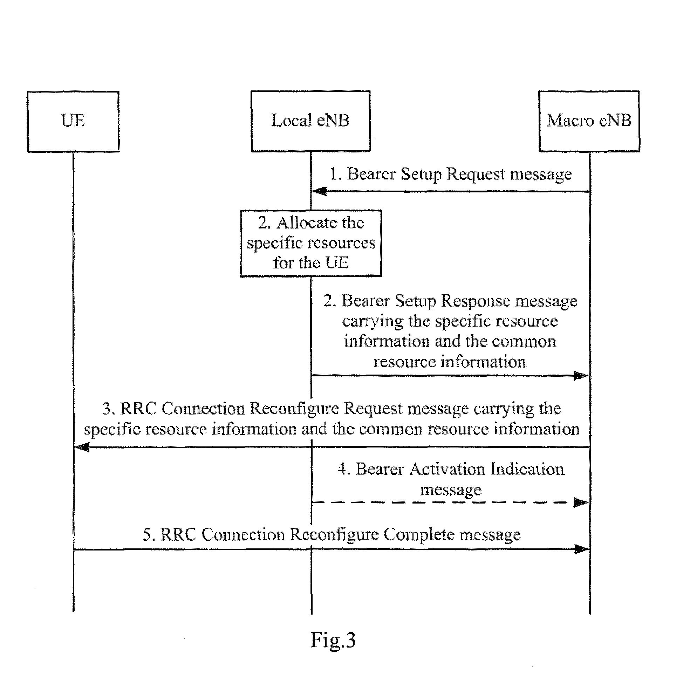

As illustrated in Fig. 3, the macro eNB deciding to operate to separate for the UE the control plane from the user plane can proceed in the following flow:

In the operation 1, the macro eNB transmits a Bearer Setup Request message carrying information about the UE and bearer related information of the UE to the local eNB.

Particularly the Bearer Setup Request message can include but will not be limited to the following information:

An Access Point Identifier (AP ID) of an interface identifies the UE uniquely on the macro eNB and is allocated by the macro eNB. In an embodiment, the AP ID can be replaced by a unique identifier of the UE allocated by the macro eNB, e.g., a Cell-Radio Network Temporary Identifier (C-RNTI), or both the AP ID and the C-RNTI can be included;

The identifier of a destination cell;

Enhanced-Radio Access Bearer (E-RAB) ID's identify respective E-RAB's uniquely;

Transport layer addresses configured for the respective E-RAB's by the macro eNB, i.e., transport layer addresses allocated for the respective E-RAB's by the macro eNB;

Quality of Service (QoS) parameters of DRB's to be separated, e.g., QoS Class Identifiers (QCI's) and/or Allocation and Retention Priorities (ARP's) and other parameters; and

A part of capabilities of the UE particularly include a UE category, physical layer parameters, radio frequency parameters (e.g., a list of supported EUTRA bands), and in an embodiment of the disclosure, possibly a feature set identifier. For the architecture where the PDCP/RLC/MAC/PHY layers of all or a part of the DRB's of the UE need to be maintained on the local eNB, the part of the capabilities of the UE further include a PDCP parameter, where the physical layer parameters can include one or any combination of the following parameters: TxAntennaSelectionSupported, SpecificRefSigsSupported, enhanced two-layer Time Division Duplex (TDD), two antenna ports for a Physical Uplink Control Channel (PUCCH), tm9-With-8Tx-FDD (with a support of 8 antennas in FDD), pmi-Disabling (PMI disabled), cross-carrier scheduling, concurrent PUCCH-Physical Uplink Shared Channel (PUSCH), etc.

In the operation 2, the local eNB performs admission control upon reception of the Bearer Setup Request message, allocates specific resources for the corresponding UE (i.e., the UE corresponding to the AP ID or the C-RNTI carried in the Bearer Setup Request message) in response to the Bearer Setup Request message upon acceptance of the admission, and responds to the macro eNB with a Bearer Setup Response message carrying the information about the UE, and the specific resource information allocated by the local eNB for the UE and the local cell common resource information allocated by the local eNB.

Particularly the Bearer Setup Request message can include but will not be limited to the following information:
The Access Point Identifier (AP ID) of the interface identifies the UE uniquely on the macro eNB and is allocated by the macro eNB. In an embodiment, the AP ID can be replaced by a unique identifier of the UE allocated by the macro eNB, e.g., a Cell-Radio Network Temporary Identifier (C-RNTI), or both the AP ID and the C-RNTI can be included;
The enhanced-Radio Access Bearer (E-RAB) ID's identify the respective E-RAB's uniquely; and
Transport layer addresses configured for the respective E-RAB's by the local eNB, i.e., transport layer addresses allocated for the respective E-RAB's by the local eNB.

The UE specific resource information carried in the Bearer Setup Response message can include but will not be limited to one or any combination of the following information:
PDCP configuration information (which is necessary when the PDCP/RLC/MAC/PHY layers of all or a part of the DRB's of the UE need to be maintained on the local eNB);
RLC configuration information includes parameters of uplink and downlink Acknowledged Mode (AM) or Un-acknowledged Mode (UM), etc.;
A logical channel identifier identifies uniquely a logical channel configured for the UE by the local eNB, i.e., a logical channel allocated for the UE by the local eNB;
Logical channel configuration includes a priority, a Prioritized Bit Rate (PRB), a Bucket Size Duration (BSD), etc;
MAC configuration information includes one or any combination of the following information: a Buffer Status Report (BSR), a Physical Layer Frame Head (PHR) and Discrete Reception (DRX);
Specific Physical Layer Configuration information includes one or any combination of the following information: Physical Downlink Shared Channel (PDSCH) specific configuration, PUCCH specific configuration, PUSCH specific configuration, uplink power control specific configuration, Sounding Reference Signal (RS) (an RS for channel measurement, also referred to as SRS) uplink specific configuration, Channel Quality Indicator (CQI) report configuration, Transmit Power Control (TPC)-physical Downlink Control Channel (PDCCH) configuration, etc.; and
Random Access Channel (RACH) specific configuration information including a random access preamble index and/or a random access channel mask index.

The common resource information carried in the Bearer Setup Response message includes one or any combination of the following information:
RACH or Physical Random Access Channel (PRACH) common configuration information;
PDSCH common configuration information;
PUSCH common configuration information;
Physical Hybrid Automatic Repeat Request (HARQ) Indicator Channel (PHICH) configuration information;
PUCCH common configuration information;
Sounding RS common configuration information;
Antenna configuration information;
P-Max (Maximum Transmit Power);
TDD physical channel configuration information;
An uplink cyclic prefix length and other information; and
A T304 timer is configured to perform a switch procedure.

In an embodiment, the common resource information in the Bearer Setup Response message can further include carrier type configuration information to indicate whether the corresponding local cell is an operating cell which can operate independently.

The common resource information of the local eNB can be retrieved by the local eNB from the OAM server.

In the operation 3, the macro eNB composes and transmits an RRC Connection Reconfigure Request message including the specific resources configured for the UE by the local eNB, the common resources of the local eNB and other information, all of which is available from the Bearer Setup Response message in the operation 2, upon reception of the Bearer Setup Response message to instruct the corresponding UE to operate to separate the control plane from the user plane.

In the operation 4, the local eNB transmits a Bearer Activation Indication message to the macro eNB upon reception of a SYNC message from the UE to be separated, i.e., the UE for which the DRB's are separated.

In the operation 5, the corresponding UE returns an RRC Connection Reconfigure Complete message to the macro eNB after operating to reconfigure the RRC connections.

Admission control on the UE can alternatively be performed by the macro eNB, and in this case, the macro eNB can transmit the Bearer Setup Request message to the local cell in a handling process similar to the flow above upon deciding that the local cell can admit the UE.

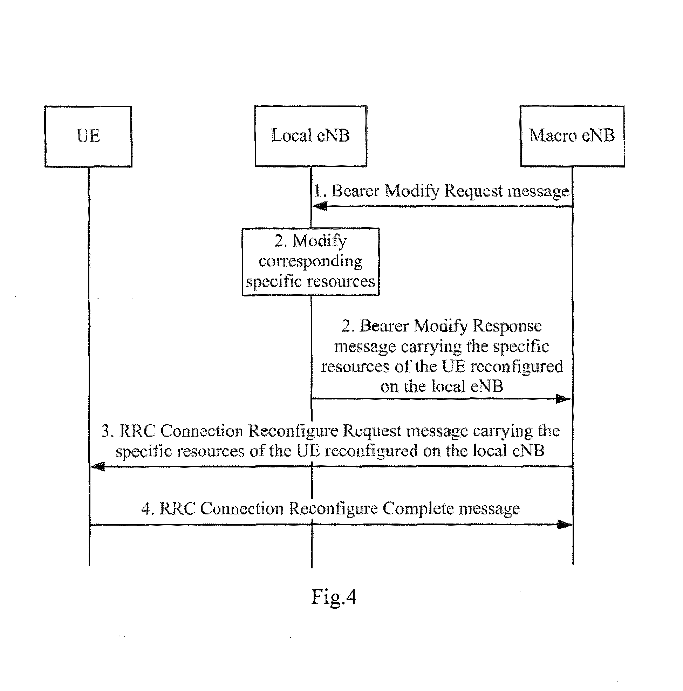

As illustrated in Fig. 4, the macro eNB deciding to modify established bearers can proceed in the following flow:
In the operation 1, the macro eNB transmits a Bearer Modify Request message carrying context identifier information of the UE, e.g., the AP ID, and one or any combination of the following information to the local eNB:
An added E-RAB information set;
An E-RAB information set to be deleted; and
An E-RAB information set to be modified;

Where the added E-RAB information set includes E-RAB ID's of newly added UE bearers and also possibly the transport layer addresses allocated by the macro eNB for the E-RAB's and/or the corresponding QoS parameters (e.g., the QCI's or the ARP's or parameters), etc.; the E-RAB information set to be deleted includes the E-RAB ID's, updated QoS parameters (e.g., the QCI's or the ARP's or other parameters), etc., of the UE bearers to be modified; and the E-RAB information set to be modified includes the E-RAB ID's of the UE bearers to be deleted.

In the operation 2, the local eNB modifies the specific resources of the corresponding UE (i.e., the UE corresponding to the AP ID carried in the Bearer Modify Request message) in response to the received Bearer Modify Request message and composes and transmits a Bearer Modify Response message carrying the identifier information of the UE, e.g., the AP ID of the interface, to the macro eNB.

If the Bearer Modify Request message includes the added E-RAB information set, then the local eNB allocates the UE specific resources for the corresponding bearers according to the information set and returns a Bearer Modify Response message carrying the corresponding E-RAB information set including but not limited to the following information corresponding to each newly added E-RAB: the E-RAB ID, and the transport layer address and specific resource information allocated for the E-RAB by the local eNB, where the specific resource information can include any one or but will not be limited to the following information: the PDCP configuration information (which is necessary when the PDCP/RLC/MAC/PHY layers of all or a part of the DRB's of the UE need to be maintained on the local eNB), the RLC configuration information, the logical channel identifier, the logical channel configuration, etc., and also possibly the MAC configuration information, the specific physical layer configuration information, etc.

If the Bearer Modify Request message includes the E-RAB information set to be modified, then the local eNB modifies the UE specific resource information for the corresponding bearers of the corresponding UE according to the information set and returns a Bearer Modify Response message carrying the corresponding E-RAB information set including but not limited to the following information corresponding to each modified E-RAB: the E-RAB ID and the modified specific resource information, where the modified specific resource information can include any one or but will not be limited to the following information: the PDCP configuration information (which is necessary when the PDCP/RLC/MAC/PHY layers of all or a part of the DRB's of the UE need to be maintained on the local eNB), the RLC configuration information, the logical channel identifier, the logical channel configuration, etc., and also possibly the MAC configuration information, the specific physical layer configuration information, etc.

If the Bearer Modify Request message includes the E-RAB information set to be deleted, then the local eNB deletes the specific resources for the corresponding bearers of the corresponding UE according to the information set and returns a Bearer Modify Response message carrying the corresponding E-RAB information set including the E-RAB ID corresponding to each deleted E-RAB.

In the operation 3, the macro eNB composes and transmits an RRC Connection Reconfigure Request message which can include the DRB specific resources of the UE reconfigured on the local eNB, and in an embodiment of the disclosure, also possibly the resources reconfigured on the macro eNB, and other information, upon reception of the Bearer Modify Response message to instruct the corresponding UE to operate to reconfigure the DRB's, where the DRB specific resource information of the UE reconfigured on the local eNB is available from the Bearer Modify Response message in the operation 2.

In the operation 4, the corresponding UE returns an RRC Connection Reconfigure Complete message to the macro eNB after operating to reconfigure the RRC connections.

In an embodiment of the disclosure, the Bearer Modify Response message above can further include the carrier type configuration information to indicate whether the corresponding local cell is an operating cell which can operate independently.

As illustrated, the local eNB deciding to modify the MAC layer or physical layer specific configuration information of the UE can proceed in the following flow:

In the operation 1, the local eNB transmits a Bearer Modify Request message carrying context identifier information of the UE, e.g., the AP ID, to the macro eNB. In an embodiment of the disclosure, the request message can further carry MAC configuration, specific physical layer configuration modification and other information suggested by the local eNB.

In the operation 2, the macro eNB composes and transmits a Bearer Modify Response message to the local eNB.

In the operation 3, the macro eNB composes and transmits an RRC Connection Reconfiguration message to instruct the corresponding UE (i.e., the UE corresponding to the AP ID carried in the Bearer Modify Request message) to operate for reconfiguration. The message can include MAC layer or physical layer specific configuration information of the UE reconfigured on the local eNB, and in an embodiment of the disclosure, also possibly the resources reconfigured on the macro eNB. and other information.

In the operation 4, the corresponding UE returns an RRC Connection Reconfigure Complete message to the macro eNB after operating to reconfigure the RRC connections.

In an embodiment of the disclosure, the macro eNB instructs the local eNB to apply the new configuration after transmitting the RRC Connection Reconfiguration message to the UE or upon reception of the RRC Connection Reconfigure Complete message returned by the UE.

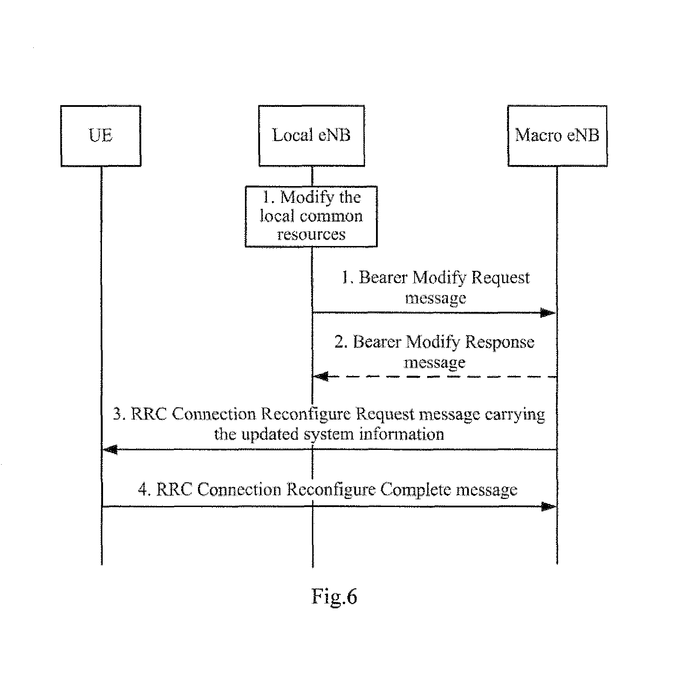

As illustrated in Fig.6, the local eNB with a change to the common resources (system information) managed by the local eNB can proceed in the following flow:
In the operation 1, the local eNB transmits a Bearer Modify Request message carrying context identifier information of the UE, e.g., the AP ID, to the macro eNB. In an embodiment of the disclosure, the local common resource information carried in the Bearer Modify Request message can include one or any combination of the following information:
   RACH and/or PRACH common configuration information;
   PDSCH common configuration information;
   PUSCH common configuration information;
   PHICH configuration information;
   PUCCH common configuration information;
   Sounding RS common configuration information;
   Antenna configuration information;
   P-Max (Maximum Transmit Power);
   TDD physical channel configuration information; and
   An uplink cyclic prefix length and other information.

In an embodiment of the disclosure, the local common resource information can further include carrier type configuration information to indicate whether the corresponding local cell is an operating cell which can operate independently.

In the operation 2, the macro eNB composes and transmits a Bearer Modify Response message to the local eNB.

In the operation 3, the macro eNB composes and transmits an RRC Connection Reconfigure Request message to instruct the corresponding UE (i.e., the UE corresponding to the AP ID carried in the Bearer Modify Request message) to operate for reconfiguration, where the message can include updated common resource information (system information), and in an embodiment of the disclosure, also possibly the resources reconfigured on the macro eNB, and other information.

In the operation 4, the corresponding UE returns an RRC Connection Reconfiguration Complete message to the macro eNB after operating to reconfigure the RRC connections.

In an embodiment of the disclosure, the macro eNB instructs the local eNB to apply the new configuration after transmitting the RRC Connection Reconfiguration message to the UE or upon reception of an RRC Connection Reconfigure Complete message returned by the UE.

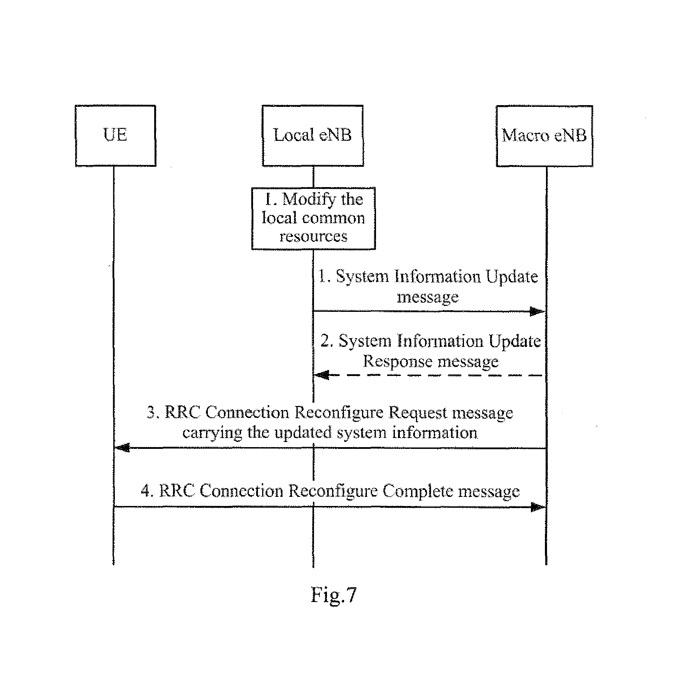

As illustrated in Fig. 7, the local eNB with a change to the common resources (system information) managed by the local eNB can alternatively proceed in the following flow:

In the operation 1, the local eNB transmits a System Info Update Request message carrying the cell identifier of the local cell to the macro eNB. In an embodiment of the disclosure, the local common resource information carried in the System Info Update Request can include one or any combination of the following information:
RACH and/or PRACH common configuration information;
PDSCH common configuration information;
PUSCH common configuration information;
PHICH configuration information;
PUCCH common configuration information;
Sounding RS common configuration information;
Antenna configuration information;
P-Max (Maximum Transmit Power);
TDD physical channel configuration information; and
An uplink cyclic prefix length and other system information.

In an embodiment of the disclosure, the local common resource information can further include carrier type configuration information to indicate whether the corresponding local cell is an operating cell which can operate independently.

In the operation 2, the macro eNB composes and transmits a System Info Update Response message to the local eNB.

In the operation 3, the macro eNB composes and transmits an RRC Connection Reconfigure Request message for each UE separated to this local eNB to instruct the UE to operate for reconfiguration, where the message can include updated common resource information (system information), and in an embodiment of the disclosure, also possibly the resources reconfigured on the macro eNB, and other information.

In the operation 4, the corresponding UE returns an RRC Connection Reconfiguration Complete message to the macro eNB after operating to reconfigure the RRC connections.

In an embodiment of the disclosure, the macro eNB instructs the local eNB to apply the new configuration after transmitting the RRC Connection Reconfiguration message to the UE or upon reception of an RRC Connection Reconfigure Complete message returned by the UE.

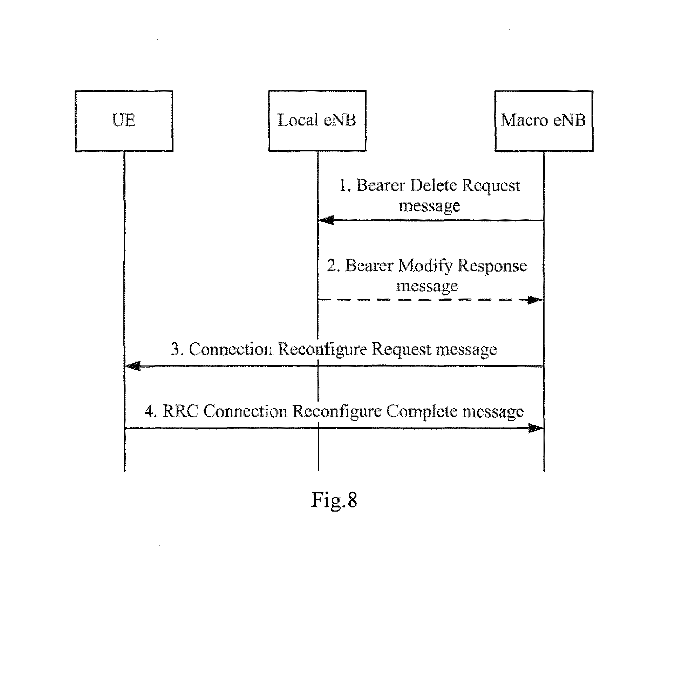

As illustrated in Fig. 8, the macro eNB deciding to delete a context of the UE at the local eNB can proceed in the following flow:
In the operation 1, the macro eNB transmits a Bearer Delete Request message carrying context identifier information of the UE, e.g., the AP ID, to the local eNB.

In the operation 2, the local eNB composes and transmits a Bearer Delete Response message to the macro eNB.

In the operation 3, the macro eNB composes and transmits an RRC Connection Reconfigure Request message to instruct the corresponding UE (i.e., the UE corresponding to the AP ID carried in the Bearer Delete Request message) to operate to delete the DRB's, where the message can indicate all the resources to be deleted of the UE on the local eNB, the resources reconfigured on the macro eNB, and other information.

In the operation 4, the corresponding UE returns an RRC Connection Reconfiguration Complete message to the macro eNB after operating for deletion.

As can be apparent from the description above, in the embodiments of the disclosure, the local eNB configures and manages the UE specific resources and the common resources so that the user plane of the UE can be separated to the local eNB to thereby decrease the number of times that the control plane of the UE is switched (an RRC handover is performed) so as to lower the probability that a call of the UE may be dropped, i.e., the probability that an RRC connection between the UE and the network may be broken.

Based up the same inventive idea, embodiments of the disclosure provide an eNB device (e.g., a macro eNB) and a local eNB device (e.g., a local eNB).

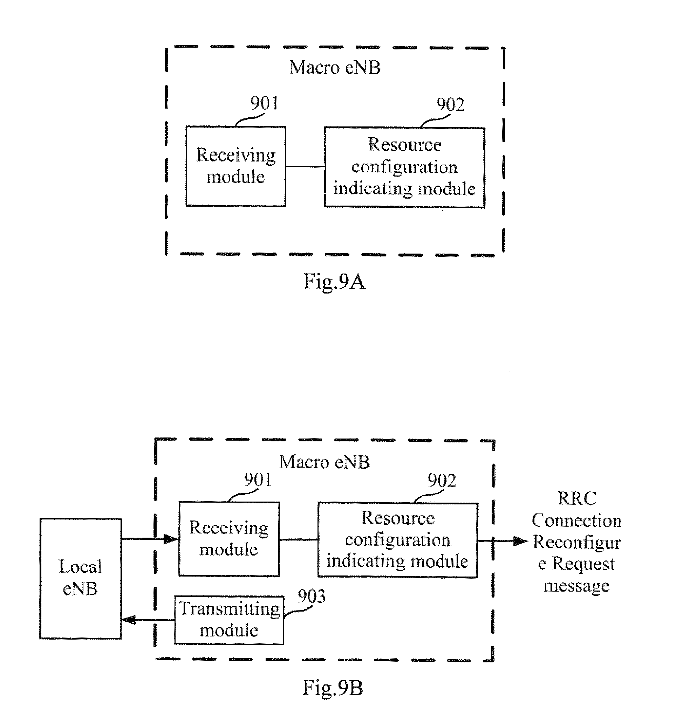

Fig. 9A illustrates a schematic structural diagram of a macro eNB device according to an embodiment of the disclosure. As illustrated in Fig. 9A, the device can include a receiving module 901 and a resource configuration indicating module 902. In an embodiment of the disclosure, the device can further include a transmitting module 903 as illustrated in Fig. 9B, where:

The receiving module 901 is to configured to receive UE specific resource information configured by a local eNB and/or local common resource information configured by the local eNB; and

The resource configuration indicating module 902 is configured to transmit the UE specific resource information configured by the local eNB, and/or the local common resource information configured by the local eNB, both of which is received by the receiving module 901 to a corresponding UE to instruct the corresponding UE to configure resources.

When the present device decides to separate for the UE the control plane from the user plane, the transmitting module 903 is configured to transmit a Bearer Setup Request message to the local eNB. Accordingly the receiving module 901 is configured to receive a Bearer Setup Response message, returned by the local eNB, carrying the UE specific resource information allocated by the local eNB for the UE for which the control plane is separated from the user plane, and the common resource information of a local cell configured by the local eNB. The resource configuration indicating module 902 is configured to transmit an RRC Connection Reconfigure Request message, carrying the UE specific resource information configured by the local eNB, and the local common resource information configured by the local eNB, to the UE for which the control plane is separated from the user plane. Particularly the contents of the Bearer Setup Request message and the contents of the Bearer Setup Response message are the same as in the embodiments of the methods above, so a repeated description thereof will be omitted here.

When the present device decides to modify UE bearers established on the local eNB, the transmitting module 903 is configured to transmit a Bearer Modify Request message to the local eNB. Accordingly the receiving module 901 is configured to receive a Bearer Modify Response message, returned by the local eNB, carrying the UE specific resource information allocated by the local eNB for the UE, for which the UE bearers are modified, in response to the Bearer Modify Request message. The resource configuration indicating module 903 is configured to transmit an RRC Connection Reconfigure Request message, carrying the UE specific resource information configured by the local eNB for the UE, to the UE for which the UE bearers are modified. Particularly the contents of the Bearer Modify Request message and the contents of the Bearer Modify Response message are the same as in the embodiments of the methods above, so a repeated description thereof will be omitted here.

After the local eNB transmits a Bearer Modify Request message after modifying MAC layer or physical layer specific configuration information of the UE, the receiving module 901 is configured to receive the Bearer Modify Request message, carrying a context identifier of the UE, and MAC layer configuration and specific physical layer configuration change information suggested by the local eNB, transmitted by the local eNB after modifying the MAC layer or the physical layer specific configuration information of the UE. Accordingly the resource configuration indicating module 902 is configured to transmit an RRC Connection Reconfigure Request message, carrying the MAC layer configuration and the specific physical layer configuration change information suggested by the local eNB, to the UE for which the MAC layer or the physical layer specific configuration information is modified.

After the local eNB transmits a Bearer Modify Request message or a System Information Update Request message after modifying the local common resource configuration information, the receiving module 901 is configured to receive the Bearer Modify Request message or the System Information Update Request message, carrying the local common resource configuration information modified by the local eNB, transmitted by the local eNB after modifying the local common resource configuration information. Accordingly the resource configuration indicating module 902 is configured to transmit an RRC Connection Reconfigure Request message, carrying the local common resource configuration information modified by the local eNB, to the corresponding UE, where if the receiving module 901 receives the Bearer Modify Request message carrying information to indicate the UE, then the corresponding UE is the UE indicated by the Bearer Modify Request message, and if the receiving module 901 receives the System Information Update Request message carrying information to indicate the cell, then the corresponding UE is the UE in the local cell indicated by the System Information Update Request message. Particularly the contents of the Bearer Modify Request message and the contents of the System Information Update Request message are the same as in the embodiments of the methods above, so a repeated description thereof will be omitted here.

Furthermore when the present eNB device decides to delete UE bearers of the UE on the local eNB, the transmitting module 903 is further configured to transmit a Bearer Delete Request message carrying context identifier information of the UE to the local eNB; and accordingly the resource configuration indicating module 902 is further configured to transmit an RRC Connection Reconfigure Request message, carrying information indicating all the resources to be deleted of the UE on the local eNB, to the UE for which the UE bearers are deleted.

The respective modules in the embodiments above of the disclosure can be integrated together or can be deployed separately or can be combined into a single module or can be sub-divided into a plurality of sub-modules.

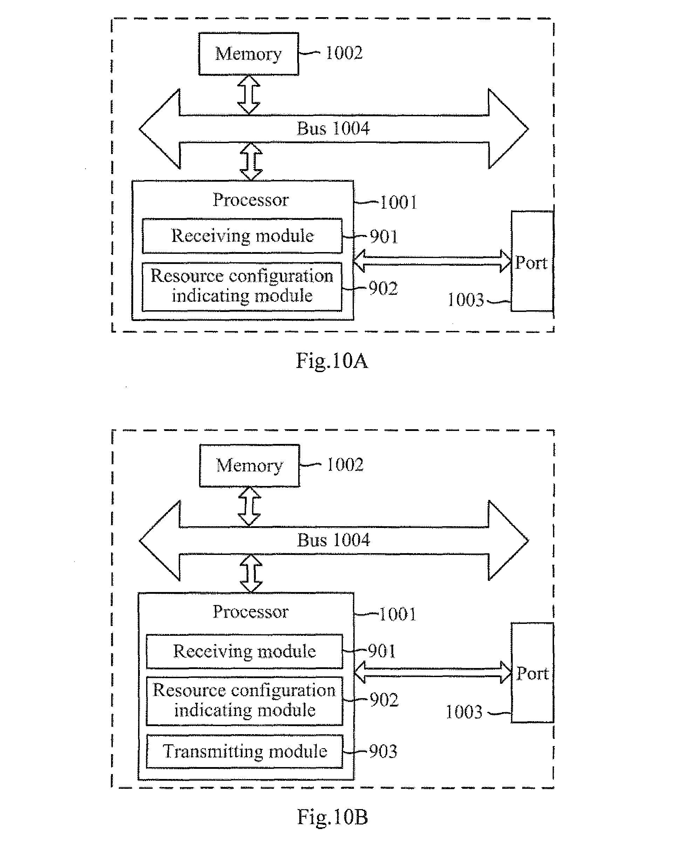

Fig. 10A illustrates a schematic structural diagram of a macro eNB device in hardware according to an embodiment of the disclosure. As illustrated in Fig. 10A, the macro eNB device can include a processor 1001, a memory 1002, at least one port 1003, and a bus 1004, where the processor 1001 and the memory 1002 are connected with each other over a bus 1004, and the macro eNB device transmits and receives data via the port 1003, where:
The memory 1002 stores therein machine readable instructions; and

The processor 1001 executes the machine readable instructions to perform the operations of:
Receiving UE specific resource information configured by a local eNB and/or local common resource information configured by the local eNB; and
Transmitting the received UE specific resource information configured by the local eNB and/or local common resource information configured by the local eNB to a corresponding UE to instruct the corresponding UE to configure resources.

The processor 1001 executes the machine readable instructions to further perform the operations of:
When the macro eNB device decides to separate for the UE the control plane from the user plane, transmitting a Bearer Setup Request message to the local eNB;
Receiving a Bearer Setup Response message, returned by the local eNB, carrying the UE specific resource information allocated by the local eNB for the UE, and the common resource information of a local cell configured by the local eNB;

Transmitting an RRC Connection Reconfigure Request message, carrying the UE specific resource information configured by the local eNB, and the local common resource information configured by the local eNB, to the UE for which the control plane is separated from the user plane.

Where the contents of the Bearer Setup Request message and the contents of the Bearer Setup Response message are the same as in the embodiments of the methods above, so a repeated description thereof will be omitted here.

The processor 1001 executes the machine readable instructions to further perform the operations of:
When the macro eNB device decides to modify UE bearers established on the local eNB, transmitting a Bearer Modify Request message to the local eNB;
Receiving a Bearer Modify Response message, returned by the local eNB, carrying the UE specific resource information allocated by the local eNB for the UE, for which the UE bearers are modified, in response to the Bearer Modify Request message;
Transmitting an RRC Connection Reconfigure Request message, carrying the UE specific resource information configured by the local eNB for the UE, to the UE for which the UE bearers are modified.

Where the contents of the Bearer Modify Request message and the contents of the Bearer Modify Response message are the same as in the embodiments of the methods above, so a repeated description thereof will be omitted here.

The processor 1001 executes the machine readable instructions to further perform the operations of:
Receiving a Bearer Modify Request message, carrying a context identifier of the UE, and MAC layer configuration and specific physical layer configuration change information suggested by the local eNB, transmitted by the local eNB after modifying MAC layer or physical layer specific configuration information of the UE; and
Transmitting an RRC Connection Reconfigure Request message, carrying the MAC layer configuration and the specific physical layer configuration change information suggested by the local eNB, to the UE for which the MAC layer or the physical layer specific configuration information is modified.

The processor 1001 executes the machine readable instructions to further perform the operations of:
Receiving a Bearer Modify Request message or the System Information Update Request message, carrying the local common resource configuration information modified by the local eNB, transmitted by the local eNB after modifying the local common resource configuration information; and
Transmitting an RRC Connection Reconfigure Request message, carrying the local common resource configuration information modified by the local eNB, to the corresponding UE,

Where if the receiving module receives the Bearer Modify Request message carrying information to indicate the UE, then the corresponding UE is the UE indicated by the Bearer Modify Request message, and if the receiving module receives the System Information Update Request message carrying information to indicate the cell, then the corresponding UE is the UE in the local cell indicated by the System Information Update Request message.

Where the contents of the Bearer Modify Request message and the contents of the System Information Update Request message are the same as in the embodiments of the methods above, so a repeated description thereof will be omitted here.

The processor 1001 executes the machine readable instructions to further perform the operations of:
When the eNB device decides to delete UE bearers of the UE on the local eNB, transmitting a Bearer Delete Request message carrying context identifier information of the UE to the local eNB; and
Transmitting an RRC Connection Reconfigure Request message, carrying information indicating all the resources to be deleted of the UE on the local eNB, to the UE for which the UE bearers are deleted.

As can be apparent, The machine readable instructions stored in the memory 1002 can be executed by the processor 1001 to perform the functions of the receiving module 901, the resource configuration indicating module 902, and the transmitting module 903 above as illustrated in Fig. 10B.

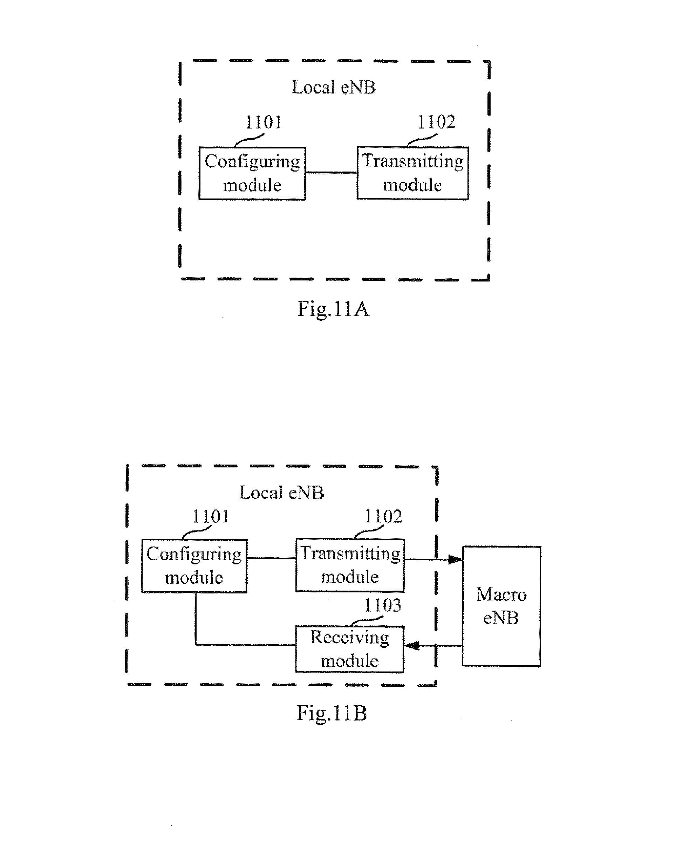

Fig. 11A illustrates a schematic structural diagram of a local eNB according to an embodiment of the disclosure. As illustrated in Fig. 11A, the device can include a configuring module 1101 and a transmitting module 1102. In an embodiment of the disclosure, the device can further include a receiving module 1103 as illustrated in Fig. 11B, where:

The configuring module 1101 is configured to configure a UE with UE specific resource information and/or local common resource information; and

The transmitting module 1102 is configured to transmit the UE specific resource information and/or the local common resource information configured by the configuring module 1101 to a macro eNB so that the macro eNB transmits the UE specific resource information and/or the local common resource information to the corresponding UE to instruct the corresponding UE to configure resources.

The macro eNB deciding to operate to separate for the UE the control plane from the user plane transmits a Bearer Setup Request message. At this time the receiving module 1103 is configured to receive the Bearer Setup Request message transmitted by the macro eNB deciding to operate to separate for the UE the control plane from the user plane. Accordingly the configuring module 1101 is configured to allocate the UE specific resource information for the UE, for which the control plane is separated from the user plane and/or to configure the common resource information of a local cell, in response to the Bearer Setup Request message. The transmitting module 1102 is configured to return a Bearer Setup Response message, carrying the UE specific resource information allocated by the local eNB for the UE for which the control plane is separated from the user plane, and the common resource information of the local cell configured by the local eNB, to the macro eNB. Particularly the contents of the Bearer Setup Request message and the contents of the Bearer Setup Response message are the same as in the embodiments of the methods above, so a repeated description thereof will be omitted here.

The macro eNB deciding to modify UE bearers established on the local eNB transmits a Bearer Modify Request message. At this time the receiving module 1103 is configured to receive the Bearer Modify Request message transmitted by the macro eNB. Accordingly the configuring module 1101 is configured to configure the UE specific resource information for the UE, for which the UE bearers are modified, in response to the Bearer Modify Request message; and the transmitting module 1102 is configured to return a Bearer Modify Response message, carrying the UE specific resource information allocated by the local eNB for the UE, for which the UE bearers are modified, in response to the Bearer Modify Request message to the macro eNB. Particularly contents of the Bearer Modify Request message and the contents of the Bearer Modify Response message are the same as in the embodiments of the methods above, so a repeated description thereof will be omitted here.

When the present device decides to modify the specific resource information of the UE, the configuring module 1101 is configured to modify MAC layer or physical layer specific configuration information of the UE. Accordingly the transmitting module 1102 is configured to transmit a Bearer Modify Request message, carrying a context identifier of the UE for which the MAC layer or physical layer specific configuration information is modified, and MAC layer configuration and specific physical layer configuration change information suggested by the local eNB, to the macro eNB.

When the present device decides to modify the local common resource information, the configuring module 1101 is configured to modify the local common resource information. Accordingly the transmitting module 1102 is configured to transmit a Bearer Modify Request message or a System Information Update Request message, carrying the local common resource information modified by the local eNB, to the macro eNB. Particularly the contents of the Bearer Modify Request message and the contents of the System Information Update Request message are the same as in the embodiments of the methods above, so a repeated description thereof will be omitted here.

When the macro eNB decides to delete UE bearers of the UE on the local eNB, the transmitting module 1102 is configured to transmit a Bearer Delete Request message carrying context identifier information of the UE. At this time the receiving module 1103 is configured to receive the Bearer Delete Request message. Accordingly the configuring module 1101 is configured to delete the corresponding UE bearers in response to the Bearer Delete Request message.

The respective modules in the embodiments above of the disclosure can be integrated together or can be deployed separately or can be combined into a single module or can be sub-divided into a plurality of sub-modules.

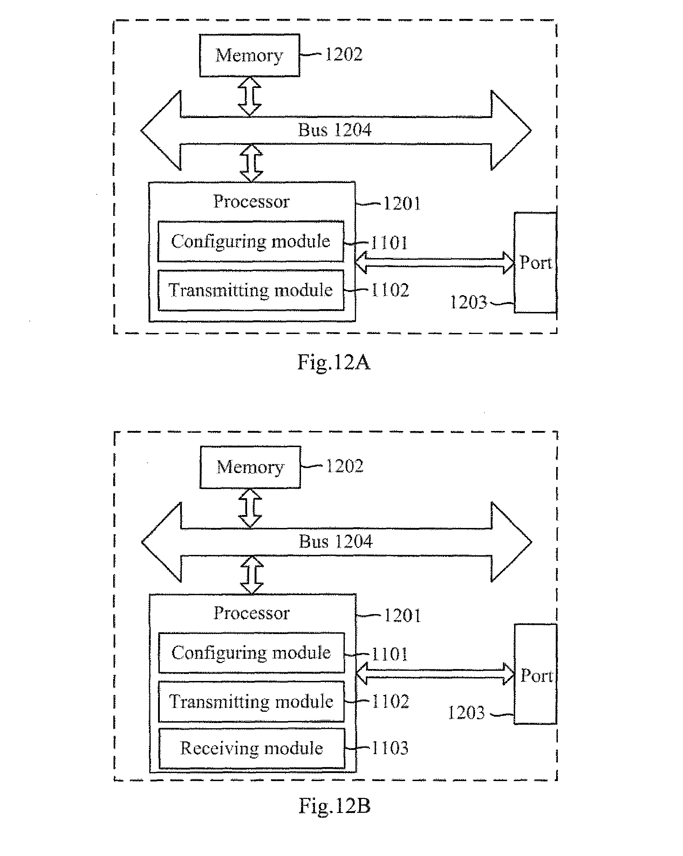

Fig. 12A illustrates a schematic structural diagram of a local eNB device in hardware according to an embodiment of the disclosure. As illustrated in Fig. 12A, the local eNB device can include a processor 1201, a memory 1202, at least one port 1203, and a bus 1204, where the processor 1201 and the memory 1202 are connected with each other over a bus 1204, and the local eNB device transmits and receives data via the port 1203, where:
The memory 1202 stores therein machine readable instructions; and
The processor 1201 executes the machine readable instructions to perform the operations of:
   Configuring a UE with UE specific resource information and/or local common resource information; and
   Transmitting the UE specific resource information and/or the local common resource information configured by the configuring module 1101 to a macro eNB so that the macro eNB transmits the UE specific resource information and/or the local common resource information to the corresponding UE to instruct the corresponding UE to configure resources.

The processor 1201 executes the machine readable instructions to further perform the operations of:
Receiving a Bearer Setup Request message transmitted by the macro eNB deciding to operate to separate for the UE the control plane from the user plane;
Allocating the UE specific resource information for the UE and/or configuring the common resource information of a local cell, in response to the Bearer Setup Request message; and
Returning a Bearer Setup Response message, carrying the UE specific resource information allocated by the local eNB for the UE and the common resource information of the local cell configured by the local eNB to the macro eNB.

Particularly the contents of the Bearer Setup Request message and the contents of the Bearer Setup Response message are the same as in the embodiments of the methods above, so a repeated description thereof will be omitted here.

The processor 1201 executes the machine readable instructions to further perform the operations of:
Receiving a Bearer Modify Request message transmitted by the macro eNB deciding to modify UE bearers established on the local eNB;
Configuring the UE specific resource information for the UE, for which the UE bearers are modified, in response to the Bearer Modify Request message; and

Returning a Bearer Modify Response message, carrying the UE specific resource information allocated by the local eNB for the UE, for which the UE bearers are modified, in response to the Bearer Modify Request message to the macro eNB.

Particularly contents of the Bearer Modify Request message and the contents of the Bearer Modify Response message are the same as in the embodiments of the methods above, so a repeated description thereof will be omitted here.

The processor 1201 executes the machine readable instructions to further perform the operations of:
Modifying MAC layer or physical layer specific configuration information of the UE; and
Transmitting a Bearer Modify Request message, carrying a context identifier of the UE for which the MAC layer or physical layer specific configuration information is modified, and MAC layer configuration and specific physical layer configuration change information suggested by the local eNB, to the macro eNB.

The processor 1201 executes the machine readable instructions to further perform the operations of:
Modifying the local common resource information; and
Transmitting a Bearer Modify Request message or a System Information Update Request message, carrying the local common resource information modified by the local eNB, to the macro eNB.

Particularly the contents of the Bearer Modify Request message and the contents of the System Information Update Request message are the same as in the embodiments of the methods above, so a repeated description thereof will be omitted here.

The processor 1201 executes the machine readable instructions to further perform the operations of:
Receiving a Bearer Delete Request message, carrying context identifier information of the UE, transmitted by the macro eNB deciding to delete UE bearers of the UE on the local eNB; and

Deleting the corresponding UE bearers in response to the Bearer Delete Request message.

As can be apparent, The machine readable instructions stored in the memory 1202 can be executed by the processor 1201 to perform the functions of the configuring module 1101, the transmitting module 1102 and the receiving module 1103 above as illustrated in Fig. 12B.

In summary, in the embodiments of the disclosure, the local eNB configures and manages both the UE specific resources and the common resources so that the user plane of the UE can be separated to the local eNB to thereby decrease the number of times that the control plane of the UE is switched so as to lower the probability that a call of the UE may be dropped, i.e., the probability that an RRC connection between the UE and the network may be broken.

The respective modules in the embodiments above of the disclosure can be embodied in software (e.g., machine readable instructions stored in a computer readable medium and executed by a processor) or in hardware (e.g., a processor of an Application Specific Integrated Circuit (ASIC)) or in a combination of software and hardware, but the embodiments of the disclosure will not be limited thereto. For example, a hardware module can include a specially designed permanent circuit or logical device (e.g., a dedicated processor, like an FPGA or an ASIC) configured to perform particular operations. The hardware module can alternatively include a programmable logical device or circuit temporarily configured in software to perform particular operations. The hardware module can be embodied particularly in the mechanical means or the dedicated permanent circuit or the temporarily configured circuit (e.g., configured in software) can be decided taking time and cost factors into account.

Those ordinarily skilled in the art can clearly appreciate from the foregoing description of the embodiments that the disclosure can be implemented in software plus a necessary general hardware platform or, of course, in hardware, although the former implementation may be preferred in many cases. Based upon such understanding, the technical solutions of the disclosure in essence or the part thereof contributing to the prior art can be embodied in the form of a software product, which can be stored in a storage medium, and which includes several instructions to cause a terminal device (e.g., a mobile phone, a personal computer, a server, a network device, etc.) to perform the methods according to the respective embodiments of the disclosure.

Those ordinarily skilled in the art can appreciate that all or a part of the flows in the method according to the embodiments above can be performed by machine readable instructions stored in a computer readable storage medium to instruct relevant hardware. The machine readable instructions can be executed to perform the flows of the embodiments of the respective methods above, and the storage medium can be a magnetic disk, an optical disk, a Read-Only Memory (ROM), a Random Access Memory (RAM), etc.

The drawings in the embodiments of the disclosure are merely illustrative of some of the embodiments, and one or more of the modules and the operations illustrated therein may not be essential to the disclosure. The modules can be combined into a single module or subdivided into a plurality of sub-modules.

The foregoing disclosure is merely illustrative of the preferred embodiments of the disclosure but not intended to limit the scope of the disclosure as claimed. It shall be noted that those ordinarily skilled in the art can further make several modifications and variations without departing from the principle of the embodiments of the disclosure and that these modifications and variations shall also be construed as falling into the scope of the disclosure as claimed.

## Claims

1. A method for managing a local bearer, the method comprising:
receiving, by a macro evolved Node B, eNB, User Equipment, UE, specific resource information configured by a local eNB, and/or local common resource information configured by the local eNB; and
transmitting, by the macro eNB, the UE specific resource information configured by the local eNB, and/or the local common resource information configured by the local eNB, to a corresponding UE to instruct the corresponding UE to configure resources.

2. The method of claim 1, wherein receiving, by the macro eNB, the UE specific resource information configured by the local eNB, and/or the local common resource information configured by the local eNB comprises:
transmitting, by the macro eNB, a Bearer Setup Request message to the local eNB upon deciding to separate for the UE the control plane from the user plane, and
receiving, by the macro eNB, a Bearer Setup Response message, returned by the local eNB, carrying the UE specific resource information allocated by the local eNB for the UE and the common resource information of a local cell configured by the local eNB;
transmitting, by the macro eNB, the UE specific resource information configured by the local eNB and the local common resource information configured by the local eNB to the corresponding UE comprises:
transmitting, by the macro eNB, a Radio Resource Control, RRC, Connection Reconfigure Request message, carrying the UE specific resource information configured by the local eNB, and the local common resource information configured by the local eNB, to the UE.

3. The method of claim 2, wherein the Bearer Setup Request message carries:
identifier information of the UE allocated by the macro eNB;
an identifier of a destination cell;
Enhanced-Radio Access Bearer, E-RAB, Identifiers, ID's, to identify respective E-RAB's uniquely;
transport layer addresses allocated for the respective E-RAB's by the macro eNB;
Quality of Service, QoS, parameters of Data Radio Bearers, DRB's, to be separated; and
capability information of the UE comprising one or any combination of a category of the UE, physical layer parameters, radio frequency parameters and Packet Data Convergence Protocol, PDCP, parameters.

4. The method of claim 3, wherein the identifier information of the UE comprises an Access Point Identifier, AP ID, of an interface and/or a Cell-Radio Network Temporary Identifier, C-RNTI.

5. The method of claim 2, wherein the UE specific resource information carried in the Bearer Setup Response message comprises one or any combination of:
PDCP configuration information;
Radio Link Control, RLC, configuration information;
a logical channel identifier to identify uniquely a logical channel allocated for the UE by the local eNB;
logical channel configuration information;
Media Access Control, MAC, configuration information comprising one or any combination of a Buffer Status Report, BSR, a Physical Layer Frame Head, PHR, and Discrete Reception, DRX;
specific Physical Layer Configuration information comprising one or any combination of Physical Downlink Shared Channel, PDSCH, specific configuration information, Physical Uplink Control Channel, PUCCH, specific configuration information, Physical Uplink Shared Channel, PUSCH, specific configuration information, uplink power control specific configuration information, Sounding Reference Signal, SRS, uplink specific configuration information, Channel Quality Indicator, CQI, report configuration information and Transmit Power Control, TPC,-physical Downlink Control Channel, PDCCH, configuration information; and
Random Access Channel, RACH, specific configuration information; and
the common resource information carried in the Bearer Setup Response message comprises one or any combination of:
RACH or Physical Random Access Channel, PRACH, common configuration information;
PDSCH common configuration information;
PUSCH common configuration information;
Physical Hybrid Automatic Repeat Request, HARQ, Indicator Channel, PHICH, configuration information;
PUCCH common configuration information;
SRS common configuration information;
antenna configuration information;
maximum transmit power;
Time Division Duplex, TDD, physical channel configuration information; and
an uplink cyclic prefix length information.

6. The method of claim 1, wherein receiving, by the macro eNB, the UE specific resource information configured by the local eNB comprises:
transmitting, by the macro eNB, a Bearer Modify Request message to the local eNB upon deciding to modify UE bearers established on the local eNB; and
receiving, by the macro eNB, a Bearer Modify Response message, returned by the local eNB, carrying the UE specific resource information allocated by the local eNB for the UE, for which the UE bearers are modified, in response to the Bearer Modify Request message; and
transmitting, by the macro eNB, the UE specific resource information configured by the local eNB to the corresponding UE comprises:
transmitting, by the macro eNB, an RRC Connection Reconfigure Request message, carrying the UE specific resource information configured by the local eNB for the UE, to the UE for which the UE bearers are modified

7. The method of claim 6, wherein the Bearer Modify Request message and the Bearer Modify Response message carry context identifier information of the UE, and an added E-RAB information set; and the E-RAB information set in the Bearer Modify Request message comprises E-RAB ID's of newly added UE bearers, E-RAB's, and transport layer addresses allocated by the macro eNB for the E-RAB's or QoS parameters allocated by the macro eNB for the E-RAB's, and the E-RAB information set in the Bearer Modify Response message comprises the E-RAB ID's of the newly added UE bearers and a transport layer address allocated by the local eNB for each E-RAB, and one or any combination of PDCP configuration information, RLC configuration information, a logical channel identifier and logical channel configuration; or
the Bearer Modify Request message and the Bearer Modify Response message carry the context identifier information of the UE, and an E-RAB information set to be modified; and the E-RAB information set in the Bearer Modify Request message comprises E-RAB ID's of UE bearers to be modified and updated QoS parameters, and the E-RAB information set in the Bearer Modify Response message comprises the E-RAB ID's, and a transport layer address allocated by the local eNB for each E-RAB, and one or any combination of PDCP configuration information, RLC configuration information, a logical channel identifier and logical channel configuration; or
the Bearer Modify Request message and the Bearer Modify Response message carry the context identifier information of the UE, and an E-RAB information set to be deleted; and the E-RAB information set in the Bearer Modify Request message comprises E-RAB ID's of UE bearers to be deleted, and the E-RAB information set in the Bearer Modify Response message comprises the E-RAB ID's of the deleted UE bearers.

8. The method of claim 6, wherein the Bearer Modify Response message further carries carrier type configuration information.

9. The method of claim 1, wherein receiving, by the macro eNB, the UE specific resource information configured by the local eNB comprises:
receiving, by the macro eNB, a Bearer Modify Request message, carrying a context identifier of the UE, and MAC layer configuration change information and specific physical layer configuration change information suggested by the local eNB, transmitted by the local eNB after modifying MAC layer and physical layer specific configuration information of the UE; and
transmitting, by the macro eNB, the UE specific resource information configured by the local eNB to the corresponding UE comprises:
transmitting, by the macro eNB, an RRC Connection Reconfigure Request message, carrying the MAC layer configuration change information and the specific physical layer configuration change information suggested by the local eNB, to the UE for which the MAC layer or the physical layer specific configuration information is modified.

10. The method of claim 1, wherein receiving, by the macro eNB, the local common resource configuration information configured by the local eNB comprises:
receiving, by the macro eNB, a Bearer Modify Request message or a System Information Update Request message, carrying the local common resource configuration information modified by the local eNB, transmitted by the local eNB after modifying the local common resource information;
transmitting, by the macro eNB, the local common resource configuration information configured by the local eNB to the corresponding UE comprises:
transmitting, by the macro eNB, an RRC Connection Reconfigure Request message, carrying the local common resource information modified by the local eNB, to the corresponding UE;
wherein if the macro eNB receives the Bearer Modify Request message carrying information to indicate the UE, then the corresponding UE is the UE indicated by the Bearer Modify Request message, and if the macro eNB receives the System Information Update Request message carrying information to indicate a cell, then the corresponding UE is the UE in the local cell indicated by the System Information Update Request message.

11. The method of claim 10, wherein the Bearer Modify Request message carries context information of the UE; and
the local common resource information carried in the Bearer Modify Request message comprises one or any combination of:
RACH and/or PRACH common configuration information;
PDSCH common configuration information;
PUSCH common configuration information;
PHICH configuration information;
PUCCH common configuration information;
SRS common configuration information;
antenna configuration information;
maximum transmit power;
TDD physical channel configuration information; and
an uplink cyclic prefix length.

12. The method of claim 10, wherein the System Information Update Request message carries identifier information of the local cell; and
the local common resource information carried in the System Information Update Request message comprises one or any combination of:
RACH and/or PRACH common configuration information;
PDSCH common configuration information;
PUSCH common configuration information;
PHICH configuration information;
PUCCH common configuration information;
SRS common configuration information;
antenna configuration information;
maximum transmit power;
TDD physical channel configuration information; and
an uplink cyclic prefix length.

13. The method of claim 11 or 12, wherein the local common resource information further comprises carrier type configuration information.

14. The method of claim 1, wherein the method further comprises:
transmitting, by the macro eNB, a Bearer Delete Request message carrying context identifier information of the UE to the local eNB upon deciding to delete UE bearers of the UE on the local eNB; and
transmitting, by the macro eNB, an RRC Connection Reconfigure Request message, carrying information indicating all the resources to be deleted of the UE on the local eNB, to the UE for which the UE bearers are deleted.

15. A method for managing a local bearer, the method comprising:
configuring, by a local eNB, a UE with UE specific resource information and/or local common resource information; and
transmitting, by the local eNB, the configured UE specific resource information and/or local common resource information to a macro eNB so that the macro eNB transmits the UE specific resource information and/or the local common resource information to the corresponding UE to instruct the corresponding UE to configure resources.

16. The method of claim 15, wherein configuring, by the local eNB, the UE with the UE specific resource information and/or the local common resource information comprises:
receiving, by the local eNB, a Bearer Setup Request message transmitted by the macro eNB upon deciding to operate to separate for the UE the control plane from the user plane, and allocating, by the local eNB, the UE specific resource information for the UE and/or configuring the common resource information of a local cell for the UE, in response to the Bearer Setup Request message; and
transmitting, by the local eNB, the configured UE specific resource information and/or the configured local common resource information to the macro eNB comprises:
returning, by the local eNB, a Bearer Setup Response message, carrying the UE specific resource information allocated by the local eNB for the UE and the common resource information of the local cell configured by the local eNB to the macro eNB.

17. The method of claim 16, wherein the Bearer Setup Request message carries:
identifier information of the UE allocated by the macro eNB;
an identifier of a destination cell;
Enhanced-Radio Access Bearer, E-RAB, Identifiers, ID's, to identify respective E-RAB's uniquely;
transport layer addresses allocated for the respective E-RAB's by the macro eNB;
Quality of Service, QoS, parameters of Data Radio Bearers, DRB's, to be separated; and
capability information of the UE comprising one or any combination of a category of the UE, physical layer parameters, radio frequency parameters and Packet Data Convergence Protocol, PDCP, parameters.

18. The method of claim 17, wherein the identifier information of the UE comprises an Access Point Identifier, AP ID, of an interface and/or a Cell-Radio Network Temporary Identifier, C-RNTI.

19. The method of claim 16, wherein the UE specific resource information carried in the Bearer Setup Response message comprises one or any combination of:
PDCP configuration information;
Radio Link Control, RLC, configuration information;
a logical channel identifier to identify uniquely a logical channel allocated for the UE by the local eNB;
logical channel configuration information;
Media Access Control, MAC, configuration information comprising one or any combination of a Buffer Status Report, BSR, a Physical Layer Frame Head, PHR, and Discrete Reception, DRX;
specific Physical Layer Configuration information comprising one or any combination of Physical Downlink Shared Channel, PDSCH, specific configuration information, Physical Uplink Control Channel, PUCCH, specific configuration information, Physical Uplink Shared Channel, PUSCH, specific configuration information, uplink power control specific configuration information, Sounding Reference Signal, SRS, uplink specific configuration information, Channel Quality Indicator, CQI, report configuration information and Transmit Power Control, TPC,-physical Downlink Control Channel, PDCCH, configuration information;
and
Random Access Channel, RACH, specific configuration information; and
the common resource information carried in the Bearer Setup Response message comprises one or any combination of:
RACH or Physical Random Access Channel, PRACH, common configuration information;
PDSCH common configuration information;
PUSCH common configuration information;
Physical Hybrid Automatic Repeat Request, HARQ, Indicator Channel, PHICH, configuration information;
PUCCH common configuration information;
SRS common configuration information;
antenna configuration information;
maximum transmit power;
Time Division Duplex, TDD, physical channel configuration information; and
an uplink cyclic prefix length.

20. The method of claim 15, wherein configuring, by the local eNB, the UE with the UE specific resource information comprises:
receiving, by the local eNB, the Bearer Modify Request message transmitted by the macro eNB upon deciding to modify UE bearers established on the local eNB, and configuring the UE specific resource information for the UE, for which the UE bearers are modified, in response to the Bearer Modify Request message; and
transmitting, by the local eNB, the configured UE specific resource information to the macro eNB comprises:
returning, by the local eNB, a Bearer Modify Response message, carrying the UE specific resource information allocated by the local eNB for the UE, for which the UE bearers are modified, in response to the Bearer Modify Request message to the macro eNB.

21. The method of claim 20, wherein the Bearer Modify Request message and the Bearer Modify Response message carry context identifier information of the UE, and an added E-RAB information set; and the E-RAB information set in the Bearer Modify Request message comprises E-RAB ID's of newly added UE bearers (E-RAB's) and transport layer addresses allocated by the macro eNB for the E-RAB's or QoS parameters allocated by the macro eNB for the E-RAB's, and the E-RAB information set in the Bearer Modify Response message comprises the E-RAB ID's of the newly added UE bearers and a transport layer address allocated by the local eNB for each E-RAB, and one or any combination of PDCP configuration information, RLC configuration information, a logical channel identifier and logical channel configuration; or
the Bearer Modify Request message and the Bearer Modify Response message carry the context identifier information of the UE, and an E-RAB information set to be modified; and the E-RAB information set in the Bearer Modify Request message comprises E-RAB ID's of UE bearers to be modified and updated QoS parameters, and the E-RAB information set in the Bearer Modify Response message comprises the E-RAB ID's, and a transport layer address allocated by the local eNB for each E-RAB, and one or any combination of PDCP configuration information, RLC configuration information, a logical channel identifier and logical channel configuration; or
the Bearer Modify Request message and the Bearer Modify Response message carry the context identifier information of the UE, and an E-RAB information set to be deleted; and the E-RAB information set in the Bearer Modify Request message comprises E-RAB ID's of UE bearers to be deleted, and the E-RAB information set in the Bearer Modify Response message comprises the E-RAB ID's of the deleted UE bearers.

22. The method of claim 20, wherein the Bearer Modify Response message further carries carrier type configuration information.

23. The method of claim 15, wherein configuring, by the local eNB, the UE with the UE specific resource information comprises:
modifying, by the local eNB, MAC layer or physical layer specific configuration information of the UE; and
transmitting, by the local eNB, the configured UE specific resource information to the macro eNB comprises:
transmitting, by the local eNB, a Bearer Modify Request message, carrying a context identifier of the UE for which the MAC layer or physical layer specific configuration information is modified, and MAC layer configuration and specific physical layer configuration change information suggested by the local eNB, to the macro eNB.

24. The method of claim 15, wherein configuring, by the local eNB, the local common resource information comprises:
modifying, by the local eNB, the local common resource information; and
transmitting, by the local eNB, the configured local common resource information to the macro eNB comprises:
transmitting, by the local eNB, a Bearer Modify Request message or a System Information Update Request message, carrying the local common resource information modified by the local eNB, to the macro eNB.

25. The method of claim 24, wherein the Bearer Modify Request message carries context information of the UE; and
the local common resource information carried in the Bearer Modify Request message comprises one or any combination of:
RACH and/or PRACH common configuration information;
PDSCH common configuration information;
PUSCH common configuration information;
PHICH configuration information;
PUCCH common configuration information;
SRS common configuration information;
antenna configuration information;
maximum transmit power;
TDD physical channel configuration information; and
an uplink cyclic prefix length.

26. The method of claim 24, wherein the System Information Update Request message carries identifier information of the local cell; and
the local common resource information carried in the System Information Update Request message comprises one or any combination of:
RACH and/or PRACH common configuration information;
PDSCH common configuration information;
PUSCH common configuration information;
PHICH configuration information;
PUCCH common configuration information;
SRS common configuration information;
antenna configuration information;
maximum transmit power;
TDD physical channel configuration information; and
an uplink cyclic prefix length.

27. The method of claim 25 or 26, wherein the local common resource information further comprises carrier type configuration information.

28. The method of claim 15, wherein the method further comprises:
receiving, by the local eNB, a Bearer Delete Request message, carrying context identifier information of the UE, transmitted by the macro eNB deciding to delete UE bearers of the UE on the local eNB; and
deleting, by the local eNB, the corresponding UE bearers in response to the Bearer Delete Request message.

29. A macro eNB device, comprising:
a receiving module configured to receive UE specific resource information configured by a local eNB and/or local common resource information configured by the local eNB; and
a resource configuration indicating module configured to transmit the UE specific resource information configured by the local eNB, and/or the local common resource information configured by the local eNB, both of which is received by the receiving module to a corresponding UE to instruct the corresponding UE to configure resources.

30. The device of claim 29, wherein the device further comprises:
a transmitting module configured to transmit a Bearer Setup Request message to the local eNB when the macro eNB device decides to separate for the UE the control plane from the user plane;
the receiving module is further configured to receive a Bearer Setup Response message, returned by the local eNB, carrying the UE specific resource information allocated by the local eNB for the UE and the common resource information of a local cell configured by the local eNB; and
the resource configuration indicating module is further configured to transmit an RRC Connection Reconfigure Request message, carrying the UE specific resource information configured by the local eNB, and the local common resource information configured by the local eNB, to the UE.

31. The device of claim 30, wherein the Bearer Setup Request message carries:
identifier information of the UE allocated by the macro eNB;
an identifier of a destination cell;
Enhanced-Radio Access Bearer, E-RAB, Identifiers, ID's, to identify respective E-RAB's uniquely;
transport layer addresses allocated for the respective E-RAB's by the macro eNB;
Quality of Service, QoS, parameters of Data Radio Bearers, DRB's, to be separated; and
capability information of the UE comprising one or any combination of a category of the UE, physical layer parameters, radio frequency parameters and Packet Data Convergence Protocol, PDCP, parameters;
the UE specific resource information carried in the Bearer Setup Response message comprises one or any combination of:
PDCP configuration information;
Radio Link Control, RLC, configuration information;
a logical channel identifier to identify uniquely a logical channel allocated for the UE by the local eNB;
logical channel configuration information;
Media Access Control, MAC, configuration information comprising one or any combination of a Buffer Status Report, BSR, a Physical Layer Frame Head, PHR, and Discrete Reception, DRX;
specific Physical Layer Configuration information comprising one or any combination of Physical Downlink Shared Channel, PDSCH, specific configuration information, Physical Uplink Control Channel, PUCCH, specific configuration information, Physical Uplink Shared Channel, PUSCH, specific configuration information, uplink power control specific configuration information, Sounding Reference Signal, SRS, uplink specific configuration information, Channel Quality Indicator, CQI, report configuration information and Transmit Power Control, TPC,-physical Downlink Control Channel, PDCCH, configuration information; and
Random Access Channel, RACH, specific configuration information; and
the common resource information carried in the Bearer Setup Response message comprises one or any combination of:
RACH or Physical Random Access Channel, PRACH, common configuration information;
PDSCH common configuration information;
PUSCH common configuration information;
Physical Hybrid Automatic Repeat Request Indicator Channel, PHICH, configuration information;
PUCCH common configuration information;
SRS common configuration information;
antenna configuration information;
maximum transmit power;
Time Division Duplex, TDD, physical channel configuration information; and
an uplink cyclic prefix length.

32. The device of claim 29, wherein the device further comprises:
a transmitting module configured to transmit a Bearer Modify Request message to the local eNB when the macro eNB device decides to modify UE bearers established on the local eNB;
the receiving module is further configured to receive a Bearer Modify Response message, returned by the local eNB, carrying the UE specific resource information allocated by the local eNB for the UE, for which the UE bearers are modified, in response to the Bearer Modify Request message; and
the resource configuration indicating module is further configured to transmit an RRC Connection Reconfigure Request message, carrying the UE specific resource information configured by the local eNB for the UE, to the UE for which the UE bearers are modified.

33. The device of claim 32, wherein the Bearer Modify Request message and the Bearer Modify Response message carry context identifier information of the UE, and an added E-RAB information set; and the E-RAB information set in the Bearer Modify Request message comprises E-RAB ID's of newly added UE bearers, E-RAB's, and transport layer addresses allocated by the macro eNB for the E-RAB's or QoS parameters allocated by the macro eNB for the E-RAB's, and the E-RAB information set in the Bearer Modify Response message comprises the E-RAB ID's of the newly added UE bearers and a transport layer address allocated by the local eNB for each E-RAB, and one or any combination of PDCP configuration information, RLC configuration information, a logical channel identifier and logical channel configuration; or
the Bearer Modify Request message and the Bearer Modify Response message carry the context identifier information of the UE, and an E-RAB information set to be modified; and the E-RAB information set in the Bearer Modify Request message comprises E-RAB ID's of UE bearers to be modified and updated QoS parameters, and the E-RAB information set in the Bearer Modify Response message comprises the E-RAB ID's, and a transport layer address allocated by the local eNB for each E-RAB, and one or any combination of PDCP configuration information, RLC configuration information, a logical channel identifier and logical channel configuration; or
the Bearer Modify Request message and the Bearer Modify Response message carry the context identifier information of the UE, and an E-RAB information set to be deleted; and the E-RAB information set in the Bearer Modify Request message comprises E-RAB ID's of UE bearers to be deleted, and the E-RAB information set in the Bearer Modify Response message comprises the E-RAB ID's of the deleted UE bearers.

34. The device of claim 29, wherein the receiving module is further configured to receive a Bearer Modify Request message, carrying a context identifier of the UE, and MAC layer configuration and specific physical layer configuration change information suggested by the local eNB, transmitted by the local eNB after modifying MAC layer or physical layer specific configuration information of the UE; and
the resource configuration indicating module is further configured to transmit an RRC Connection Reconfigure Request message, carrying the MAC layer configuration and the specific physical layer configuration change information suggested by the local eNB, to the UE for which the MAC layer or the physical layer specific configuration information is modified.

35. The device of claim 29, wherein the receiving module is further configured to receive a Bearer Modify Request message or a System Information Update Request message, carrying the local common resource configuration information modified by the local eNB, transmitted by the local eNB after modifying the local common resource configuration information; and
the resource configuration indicating module is configured to transmit an RRC Connection Reconfigure Request message, carrying the local common resource configuration information modified by the local eNB, to the corresponding UE,
wherein if the receiving module receives the Bearer Modify Request message carrying information to indicate the UE, then the corresponding UE is the UE indicated by the Bearer Modify Request message, and if the receiving module receives the System Information Update Request message carrying information to indicate a cell, then the corresponding UE is the UE in the local cell indicated by the System Information Update Request message.

36. The device of claim 35, wherein the Bearer Modify Request message carries context information of the UE, and the local common resource information carried in the Bearer Modify Request message comprises one or any combination of:
RACH and/or PRACH common configuration information;
PDSCH common configuration information;
PUSCH common configuration information;
PHICH configuration information;
PUCCH common configuration information;
SRS common configuration information;
antenna configuration information;
maximum transmit power;
TDD physical channel configuration information; and
an uplink cyclic prefix length; and
the System Information Update Request message carries identifier information of the local cell, and the local common resource information carried in the System Information Update Request message comprises one or any combination of:
RACH and/or PRACH common configuration information;
PDSCH common configuration information;
PUSCH common configuration information;
PHICH configuration information;
PUCCH common configuration information;
SRS common configuration information;
antenna configuration information;
maximum transmit power;
TDD physical channel configuration information; and
an uplink cyclic prefix length.

37. The device of claim 29, wherein the device further comprises:
a transmitting module further configured to transmit a Bearer Delete Request message carrying context identifier information of the UE to the local eNB when the macro eNB device decides to delete UE bearers of the UE on the local eNB; and
the resource configuration indicating module is further configured to transmit an RRC Connection Reconfigure Request message, carrying information indicating all the resources to be deleted of the UE on the local eNB, to the UE for which the UE bearers are deleted.

38. A local eNB device, comprising:
a configuring module configured to configure a UE with UE specific resource information and/or local common resource information; and
a transmitting module configured to transmit the UE specific resource information and/or the local common resource information configured by the configuring module to a macro eNB so that the macro eNB transmits the UE specific resource information and/or the local common resource information to the corresponding UE to instruct the corresponding UE to configure resources.

39. The device of claim 38, further comprising:
a receiving module configured to receive a Bearer Setup Request message transmitted by the macro eNB upon deciding to operate to separate for the UE the control plane from the user plane;
the configuring module is further configured to allocate the UE specific resource information for the UE and/or configure the common resource information of a local cell for the UE, in response to the Bearer Setup Request message;
the transmitting module is further configured to return a Bearer Setup Response message, carrying the UE specific resource information allocated by the local eNB for the UE and the common resource information of the local cell configured by the local eNB, to the macro eNB.

40. The device of claim 39, wherein the Bearer Setup Request message carries:
identifier information of the UE allocated by the macro eNB;
an identifier of a destination cell;
Enhanced-Radio Access Bearer, E-RAB, Identifiers, ID's, to identify respective E-RAB's uniquely;
transport layer addresses allocated for the respective E-RAB's by the macro eNB;
Quality of Service, QoS, parameters of Data Radio Bearers, DRB's, to be separated; and
capability information of the UE comprising one or any combination of a category of the UE, physical layer parameters, radio frequency parameters and Packet Data Convergence Protocol, PDCP, parameters;
the UE specific resource information carried in the Bearer Setup Response message comprises one or any combination of:
PDCP configuration information;
Radio Link Control, RLC, configuration information;
a logical channel identifier to identify uniquely a logical channel allocated for the UE by the local eNB;
logical channel configuration information;
Media Access Control, MAC, configuration information comprising one or any combination of a Buffer Status Report, BSR, a Physical Layer Frame Head, PHR, and Discrete Reception, DRX;
specific Physical Layer Configuration information comprising one or any combination of Physical Downlink Shared Channel, PDSCH, specific configuration information, Physical Uplink Control Channel, PUCCH, specific configuration information, Physical Uplink Shared Channel, PUSCH, specific configuration information, uplink power control specific configuration information, Sounding Reference Signal, SRS, uplink specific configuration information, Channel Quality Indicator, CQI, report configuration information and Transmit Power Control, TPC,-physical Downlink Control Channel, PDCCH, configuration information;
and
Random Access Channel, RACH, specific configuration information; and
the common resource information carried in the Bearer Setup Response message comprises one or any combination of:
RACH or Physical Random Access Channel, PRACH, common configuration information;
PDSCH common configuration information;
PUSCH common configuration information;
Physical Hybrid Automatic Repeat Request Indicator Channel, PHICH, configuration information;
PUCCH common configuration information;
SRS common configuration information;
antenna configuration information;
maximum transmit power;
Time Division Duplex, TDD, physical channel configuration information; and
an uplink cyclic prefix length.

41. The device of claim 38, wherein the device further comprises:
a receiving module configured to receive a Bearer Modify Request message transmitted by the macro eNB deciding to modify UE bearers of the UE established on the local eNB;
the configuring module is further configured to configure the UE specific resource information for the UE, for which the UE bearers are modified, in response to the Bearer Modify Request message; and
the transmitting module is further configured to return a Bearer Modify Response message, carrying the UE specific resource information allocated by the local eNB for the UE in response to the Bearer Modify Request message to the macro eNB.

42. The device of claim 41, wherein the Bearer Modify Request message and the Bearer Modify Response message carry context identifier information of the UE, and an added E-RAB information set; and the E-RAB information set in the Bearer Modify Request message comprises E-RAB ID's of newly added UE bearers, E-RAB's, and transport layer addresses allocated by the macro eNB for the E-RAB's or QoS parameters allocated by the macro eNB for the E-RAB's, and the E-RAB information set in the Bearer Modify Response message comprises the E-RAB ID's of the newly added UE bearers and a transport layer address allocated by the local eNB for each E-RAB, and one or any combination of PDCP configuration information, RLC configuration information, a logical channel identifier and logical channel configuration; or
the Bearer Modify Request message and the Bearer Modify Response message carry the context identifier information of the UE, and an E-RAB information set to be modified; and the E-RAB information set in the Bearer Modify Request message comprises E-RAB ID's of UE bearers to be modified and updated QoS parameters, and the E-RAB information set in the Bearer Modify Response message comprises the E-RAB ID's, and a transport layer address allocated by the local eNB for each E-RAB, and one or any combination ofPDCP configuration information, RLC configuration information, a logical channel identifier and logical channel configuration; or
the Bearer Modify Request message and the Bearer Modify Response message carry the context identifier information of the UE, and an E-RAB information set to be deleted; and the E-RAB information set in the Bearer Modify Request message comprises E-RAB ID's of UE bearers to be deleted, and the E-RAB information set in the Bearer Modify Response message comprises the E-RAB ID's of the deleted UE bearers.

43. The device of claim 38, wherein the configuring module is further configured to modify MAC layer or physical layer specific configuration information of the UE; and
the transmitting module is further configured to transmit a Bearer Modify Request message, carrying a context identifier of the UE for which the MAC layer or physical layer specific configuration information is modified, and MAC layer configuration and specific physical layer configuration change information suggested by the local eNB, to the macro eNB.

44. The device of claim 38, wherein the configuring module is further configured to modify the local common resource information; and
the transmitting module is further configured to transmit a Bearer Modify Request message or a System Information Update Request message, carrying the local common resource information modified by the local eNB, to the macro eNB.

45. The device of claim 44, wherein the Bearer Modify Request message carries context information of the UE; and
the local common resource information carried in the Bearer Modify Request message comprises one or any combination of:
RACH and/or PRACH common configuration information;
PDSCH common configuration information;
PUSCH common configuration information;
PHICH configuration information;
PUCCH common configuration information;
SRS common configuration information;
antenna configuration information;
maximum transmit power;
TDD physical channel configuration information; and
an uplink cyclic prefix length.

46. The device of claim 44, wherein the System Information Update Request message carries identifier information of the local cell; and
the local common resource information carried in the System Information Update Request message comprises one or any combination of:
RACH and/or PRACH common configuration information;
PDSCH common configuration information;
PUSCH common configuration information;
PHICH configuration information;
PUCCH common configuration information;
SRS common configuration information;
antenna configuration information;
maximum transmit power;
TDD physical channel configuration information; and
an uplink cyclic prefix length.

47. The device of claim 38, wherein the device further comprises:
a receiving module configured to receive a Bearer Delete Request message, carrying context identifier information of the UE, transmitted by the macro eNB deciding to delete UE bearers of the UE on the local eNB; and
the configuring module is further configured to delete the corresponding UE bearers in response to the Bearer Delete Request message.
